# EUROPÄISCHE PATENTANMELDUNG

(11) **EP 1 273 642 A2**
(43) Veröffentlichungstag der Anmeldung: **08.01.2003**
(21) Anmeldenummer: 02013361.7
(22) Anmeldetag: 19.06.2002
(51) Int. Cl.: C09J 7/02

(54) **Schutzfolie für den Transport von Fahrzeugen**

(30) Priorität: 04.07.2001 DE 10132242
(71) Anmelder: Horn & Bauer GmbH & Co. KG, 34613 Schwalmstadt (DE)
(72) Erfinder: Horn, Jörg, 34613 Schwalmstadt (DE)
(74) Vertreter: Patentanwälte Rehberg + Hüppe

(57) **Zusammenfassung**

Eine Schutzfolie für den Transport von Fahrzeugen weist eine Schutzschicht und eine mit der Schutzschicht verbundene Haftschicht aus einem Polymer auf. Die Haftschicht aus dem Polymer ist vermittels fotoreaktiver UV-Vernetzungsinitiatoren, die zumindest im wesentlichen nur auf Strahlung in der Natur nicht vorkommender Wellenlängen reagieren, ganz oder teilweise vernetzt ist.

## Beschreibung

Die Erfindung betrifft eine Schutzfolie für den Transport von Fahrzeugen, mit einer Schutzschicht und einer mit der Schutzschicht verbundenen Haftschicht aus einem Polymer. Nach heutiger Praxis werden neu produzierte Fahrzeuge nach Abschluss der Lackierarbeiten mit einem Transportschutz versehen, der gewährleistet, dass während des Transportes vom Hersteller des Fahrzeuges zum Händler eine Beschädigung des Fahrzeuglackes durch Kratzer oder durch Umwelteinflüsse, wie Regen, Schnee oder Schmutz, ausgeschlossen werden soll. Der Transportschutz besteht insbesondere aus verschiedenen Wachsen, die nach Beendigung der Lackierarbeiten auf den Lack des Fahrzeuges aufgebracht werden. Nach Empfang des Fahrzeuges durch den Händler muss dieser die Wachsschicht durch ein relativ aufwendiges Entwachsungsverfahren wieder entfernen. Die dabei verwendeten Lösungsmittel stellen für den Händler darüber hinaus ein nicht unerhebliches Entsorgungsproblem dar.

Aus der DE 42 23 822 A1 ist die Verwendung einer haftenden Schutzfolie zum Transport von Automobilen bekannt. Die Schutzfolie besteht aus einer Schutzschicht und einer Haftschicht, wobei die Schutzschicht auf der Haftschicht aufgebracht ist. Diese Schutzfolie übernimmt die Schutzfunktion des Fahrzeuges während des Transportes vom Hersteller zum Händler und ersetzt damit die bisher häufig angewendete Wachsschicht. Die Schutzfolie soll zum einen auf der Lackschicht des Fahrzeuges auch bei erhöhten mechanischen Belastungen, wie beispielsweise starken Luftströmungen beim Transport auf Lastwagen oder Eisenbahnwaggons, noch gut haften und zum anderen zugleich mit ihrer Schutzschicht gegen mechanische Beschädigungen und Umwelteinflüsse, wie Regen, Schnee, Hagel, Schmutz, Vogelkot o. dgl. dienen. Die Schutzfolie kann auch mehrere Haftschichten und mehrere Schutzschichten aufweisen. Als Haftschichten werden dabei die in der Technik üblichen Haftfolien, beispielsweise Klebefolien oder Folien aus mit bestimmten funktionellen Gruppen modifizierten Polymeren verwendet. Bevorzugt werden Acrylatklebefolien oder Folien aus mit funktionellen Gruppen modifizierten thermoplastischen Polymeren eingesetzt. Als Schutzschichten werden thermoplastische Polymere verwendet, wie beispielsweise Polyamide, Polystyrol, Polyester, Polycarbonat oder Polyolefin. Die Herstellung derartiger mehrschichtiger Schutzfolien erfolgt nach dem Beschichtungsverfahren, dem Kaschierverfahren oder dem Blas-/Breitschlitz-Koextrusionsverfahren. Dabei entsteht eine homogene Haftschicht ohne Verwendung von Lösungsmitteln. Die auf diese Weise erzielbare Haftkraft der Schutzfolie auf der Oberfläche eines Fahrzeuges ist jedoch nur begrenzt, so dass die Gefahr besteht, dass es während des Transportes bei entsprechenden Windeinflüssen zu Ablöseerscheinungen kommen kann. Diesen Nachteilen kann man dadurch begegnen, dass zusätzliches Sicherungsklebeband mit starker Adhäsion entlang der am meisten gefährdeten freien Ränder der Schutzfolie aufgeklebt wird. Andererseits lassen sich diese Schutzfolien in der Regel relativ leicht von den Oberflächen des Fahrzeuges abziehen, hinterlassen aber häufig einen Kleberand auf dem Fahrzeug, der noch entfernt werden muss. Darüber hinaus beobachtet man bei sehr hohen Temperaturen von mehr als 70 °C gelegentlich Unebenheiten und Verwerfungen auf den von diesen haftenden Schutzfolien bedeckten Lackoberflächen.

Um diesen Nachteilen abzuhelfen, wird in der EP 0 592 913 B1 vorgeschlagen, als haftende Schutzfolie beim Transport von Automobilen ein Copolymerisat aus C₂-C₁₀-α-Olefinen und 5-80 Gew.-%, bezogen auf das Copolymerisat, von ungesättigten, polaren Comonomeren zu verwenden. Derartige Schutzfolien haben jedoch den Nachteil, bei hohen Umgebungstemperaturen, beispielsweise in südlichen Ländern, über einen längeren Zeitraum anzuschmelzen und dadurch zu Überträgen auf die Lackoberfläche des Fahrzeuges zu führen. Ein solcher Übertrag kann auch durch den sogenannten Kaltfluss schon bei vergleichsweise niedrigen Temperaturen stattfinden, da die Ketten dieser thermoplastischen Materialien in der Schicht nur erstarrt nebeneinander liegen und keine feste Bindung untereinander haben. Eine solche Schutzfolie verändert insbesondere unter Langzeitbedingungen ihre Eigenschaften in nachteiliger Weise. Die Klebkraft der Schutzfolie ist insbesondere bei hohen Temperaturen und hohen mechanischen Beanspruchungen, wie sie beispielsweise auf dem Transport von mit der Schutzfolie abgedeckten Fahrzeugen auf den offenen Fahrzeugtransportwagen der Bahn auftreten, nicht mehr ausreichend.

Gemäß der DE 196 35 704 A1 soll eine Selbstklebefolie bekannt gewesen sein, bestehend aus einer PVC-Folie mit einer vernetzten Selbstklebemasse aus Polyacrylat und Isocyanat. Diese Schutzfolie wurde zum Schutz des Lacks auf der Frontpartie von Fahrzeugen gegen Steinschlag und Verschmutzungen durch aufprallende Insekten während des Einfahrvorgangs des Fahrzeugs verwendet. Die Anwendung erwies sich jedoch als problematisch, weil die Polyacrylatmasse sehr hochgradig vernetzt werden musste, um keine Wechselwirkung mit dem Fahrzeuglack zu zeigen. Dies führte zu Anwendungsproblemen wegen unzureichender Haftfestigkeit der Folie. Gemäß der DE 196 35 704 A1 wird deshalb eine selbstklebende Schutzfolie vorgeschlagen, bei der auf einer Trägerfolie eine Selbstklebemasse aufgetragen ist und die Folie aus einer Mischung von 40 Gew.-Teilen bis 70 Gew.-Teilen Polyethylen, 20 Gew.-Teilen bis 40 Gew.-Teilen Polypropylen, 8 Gew.-Teilen bis 15 Gew.-Teilen Titandioxid, 0,3 bis 0,7 Gew.-Teilen Lichtschutzstabilisatoren besteht. Die Selbstklebemasse besteht aus Polyethylenvinylacetat mit einem Vinylacetatgehalt von 40 bis 80 Mol-% und einem Verlustwinkel bei bestimmten Temperaturen.

Der Erfindung liegt die Aufgabe zugrunde, eine Schutzfolie der eingangs beschriebenen Art bereitzustellen, bei der die mit der Schutzschicht verbundene Haftschicht so eingestellt werden kann bzw. eingestellt wird, dass einerseits eine genügende Haftkraft zu der Oberfläche des Fahrzeuges resultiert, andererseits aber ein Übertrag von Material der Haftschicht auf die Lackoberfläche des Fahrzeuges auch unter Langzeitbedingungen und erhöhten Temperaturen vermieden wird.

Erfindungsgemäß wird dies bei einer Schutzfolie der eingangs beschriebenen Art dadurch erreicht, dass die Haftschicht aus dem Polymer vermittels in ihr eingelagerter fotoreaktiver UV-Vernetzungsinitiatoren, die zumindest im wesentlichen nur auf Strahlung in der Natur nicht vorkommender Wellenlängen reagieren, und einer UV-Bestrahlung ganz oder teilweise vernetzt ist.

Die Erfindung geht von dem Gedanken aus, eine Schutzfolie mit einer Schutzschicht und einer Haftschicht bereitzustellen, deren Eigenschaften sich auch unter Langzeitbedingungen und auch unter erhöhten Temperaturen nicht mehr verändern. Zu diesem Zweck bekommt die Schutzfolie eine Haftschicht aus einem Polymer, welches fotoreaktive Vernetzungsinitiatoren in entsprechenden Anteilen enthält, die durch einwirkende Strahlung feinfühlig vernetzt werden können, wobei die Vernetzung mehr oder weniger weit getrieben wird, wie es die gewünschten Eigenschaften der Haftschicht erfordern. Die Vernetzung geschieht mit Strahlung, und zwar in einem solchen Wellenlängenbereich, der in der Natur nicht vorkommt. Damit wird ausgeschlossen, dass die natürliche UV-Strahlung die Vernetzung fortführen und damit die Eigenschaften der Haftschicht verändern kann. Damit gelingt es, die Haftfähigkeit der Haftschicht so einzustellen, dass einerseits eine hinreichende Haftkraft, auch bei stärkerer mechanischer Belastung durch Wind o. dgl. erzielt wird, aber andererseits Überträge von Bestandteilen der Haftschicht auf das Fahrzeug vermieden werden. Gleichzeitig wird damit eine Schutzfolie aufgezeigt, die gänzlich aus Feststoffen besteht, d. h. ohne Lösungsmittel aufgetragen werden kann. Damit entfallen bei der neuen Schutzfolie energieaufwändige Prozesse der Trocknung und der Rückgewinnung des Lösungsmittels, wie dies bei lösungsmittelhaltigen Schutzmitteln und Dispersionen der Fall ist. Der Vernetzungsgrad der Haftschicht wird daher definiert und dauerhaft während des Produktionsprozesses abgeschlossen.

Die Haftschicht aus dem Polymer sollte insbesondere so vernetzt sein, dass die Vernetzung der Haftschicht und damit die Kohäsion auf der Seite der freien Oberfläche der Haftschicht größer als die Vernetzung und Kohäsion auf der der Schutzschicht zugekehrten Seite der Haftschicht ausgebildet ist. Die freie Oberfläche der Haftschicht wird der die Vernetzung bewirkenden Bestrahlung unmittelbar ausgesetzt, so dass die Vernetzung in der freien Oberflächenschicht intensiver herbeigeführt wird als in darunter liegenden Schichten. Es entsteht, ausgehend von der freien Oberfläche, ein Vernetzungsgradient bzw. eine abnehmende Vernetzung in Richtung auf die Schutzschicht. Dies ist beabsichtigt, um über den Querschnitt und insbesondere die Oberflächenbereiche unterschiedliche Klebekraft zu erzielen. Durch die Dauer der Bestrahlung und/oder die Konzentration der fotoreaktiven UV-Vernetzungsinitiatoren kann die Vernetzung örtlich feinfühlig ausgewählt bzw. eingestellt werden.

Die Haftschicht aus dem Polymer sollte so vernetzt sein, dass die Adhäsion der Haftschicht zu der Schutzschicht größer als die Adhäsion der Haftschicht auf der Seite der freien Oberfläche der Haftschicht ausgebildet ist. Damit ist sichergestellt, dass sich die Schutzschicht von der Haftschicht nicht löst.

Die Haftschicht kann aus einem Kleber bestehen, der lösungsmittelfrei als Schmelze auf die Schutzschicht aufgebracht ist. Während nicht vernetzte, als Schmelze auf die Schutzschicht aufgebrachte Kleber in nachteiliger Weise einen Kaltfluss aufweisen, weil die Ketten des aufgebrachten Klebers auch im Festzustand nicht in völliger Ruhe in der gleichen Position verharren, sondern - besonders unter Zugspannung - fließen, wird dieser Nachteil durch die eingangs beschriebene Vernetzung beseitigt, so dass ein Kaltfluss auch bei höheren Temperaturen, wie beispielsweise in tropischen Ländern nicht auftritt. Die Haftkraft bleibt auch unter solchen Bedingungen verlässlich erhalten, ohne dass beim Abziehen der Schutzfolie von dem Fahrzeug Kleberrückstände auf der Oberfläche des Fahrzeuges verbleiben. Die Vernetzung bewirkt eine derartige Verankerung der Ketten des Klebers mit einer daraus resultierenden verstärkten Kohäsion.

Insbesondere kann die Haftschicht aus Acrylsäureester-Copolymer mit den eingebauten fotoreaktiven UV-Vernetzungsinitiatoren bestehen. Diese Haftschicht wird aus der Schmelze auf die Schutzschicht, die vorzugsweise aus Polyolefinen besteht, aufgetragen. Hierbei handelt es sich um einen 100%igen Feststoffauftrag. Es sind weder Lösungsmittel zu entsorgen noch Lösungsmittel oder Wasser abzutrocknen. Der diesbezügliche Energieaufwand wird eingespart. Die nachfolgende UV-Vernetzung kann unter Nutzung von Quecksilberdampfdrucklampen erfolgen. Die Schutzfolie wird dann bei ihrer Herstellung einer UV-Strahlung in einem Wellenlängenbereich von etwa 250 bis 260 nm ausgesetzt. Diese Strahlung kommt in der Natur nicht vor, da dieser Strahlungsbereich von der Ozonschicht herausgefiltert wird. Die natürliche UV-Strahlung kann also die Vernetzung nicht fortführen und die Eigenschaften der Schutzfolie bleiben auch unter Langzeitbedingungen, wie sie bei der vorliegenden Anwendung auftreten, konstant.

Demgemäß bezieht sich die Erfindung auch auf die Verwendung einer Schutzfolie für den Transport von Fahrzeugen, mit einer Schutzschicht und einer mit der Schutzschicht verbundenen Haftschicht aus einem Polymer, die vermittels fotoreaktiver UV-Vernetzungsinitiatoren, die zumindest im wesentlichen nur auf Strahlung in der Natur nicht vorkommender Wellenlängen reagieren, ganz oder teilweise vernetzt ist. Die Vernetzung ist proportional zur aufgebrachten Energie, d. h. sie läuft nicht - einmal initiiert - von selbst ab. Die Vernetzung beginnt und endet mit der Bestrahlung auf der später der Oberfläche des Fahrzeuges zugekehrten Oberfläche der Haftschicht und schreitet in Richtung auf die Schutzschicht fort. Damit entsteht ein Vernetzungsgradient, der zu einer größeren Vernetzung der freien Oberfläche der Haftschicht führt und damit auf dieser Seite eine höhere Vernetzung und eine höhere Kohäsion erzeugt, die wiederum dem Klebstoffübertrag und dem Kaltfluss vorbeugen. Je höher die Vernetzung ist, je höher ist die Kohäsion und je kleiner ist die Adhäsion, also die Haftung zur Oberfläche des Fahrzeuges. Die Haftung zur Oberfläche des Fahrzeuges muss genau eingestellt werden, damit die Schutzfolie durch Windeinflüsse beim Transport und andere mechanische Belastung nicht abgerissen oder abgelöst werden kann. Diese Einstellungen sind durch einfache Versuche auffindbar.

Einzelheiten der vorliegenden Erfindung werden anhand nachfolgend beschriebener Ausführungsbeispiele weiter erläutert und verdeutlicht:

Die Schutzfolie besteht aus einer Schutzschicht und einer mit der Schutzschicht verbundenen Haftschicht. Bei der Herstellung der Schutzfolie für den Transport von Fahrzeugen wird man in aller Regel zunächst die Schutzschicht herstellen und dann die Haftschicht mit der Schutzschicht verbinden.

In einer ersten Ausführungsform wurde eine Schutzschicht als Polyolefinfolie mit einem dreischichtigen Aufbau eingesetzt. Die beiden Außenschichten bestanden aus einem modifizierten Polypropylen. Polypropylen wurde wegen der größeren Hitzebeständigkeit gegenüber Polyethylenen und der relativ glatten Oberfläche bevorzugt. Die glatte Oberfläche der der Haftschicht abgekehrten Außenschicht erzeugt eine natürliche Releasefähigkeit. Diese Releasefähigkeit ist eine Voraussetzung für ein einfaches Handling der Schutzfolie beim Abwickeln von einer Vorratsrolle. Als Mittelschicht wurde eine Mischung aus LLDPE und Copolymer der Vinylacetatgruppe eingesetzt. Diese Mitteilschicht erbringt eine hohe Kohäsion der beiden Außenschichten aus modifiziertem Polypropylen und fängt andererseits durch hohe Spleißfestigkeit die Einreißneigung der Außenschichten aus dem modifizierten Polypropylen ab.

Die Schutzfolie wies insgesamt eine Dicke von 50 µm auf. Die Aüßenschicht der Schutzschicht, die später dem Fahrzeug abgewandt ist, war weiß pigmentiert und UV-stabilisiert, um einer Versprödung und einem mechanischen Abbau der Eigenschaften der Schutzschicht im Dauereinsatz unter Sonneneinwirkung entgegenzuwirken. Durch die weiße Pigmentierung wird zusätzlich eine Reflexion von UV-Strahlung bewirkt. Die UV-Stabilisierung ist in ihrer Dosierung begrenzt, um die normalerweise migrierenden UV-Stabilisatoren gering zu halten. Alle migrierenden Stoffe, wie UV-Stabilisatoren, aber insbesondere Gleitmittel, sind sehr genau zu beobachten und zu dosieren. Bei dieser ersten Ausführungsform wurde auf den Einsatz von Gleitmitteln vollkommen verzichtet, um Veränderungen der Klebkraft der Haftschicht in einem nicht vorhersehbaren Zeitraum von vornherein die Grundlage zu entziehen.

Bei einer zweiten Ausführungsform der Schutzschicht wurde ein zweischichtiger Aufbau gewählt. Die dem Fahrzeug und der Haftschicht abgewandte Schicht der Schutzschicht bestand aus einem modifizierten Polypropylen, während die andere, der Haftschicht zugekehrte Schicht aus einem modifizierten Polypropylen, abgemischt mit einem Copolymer der Ethylenvinylacetatguppe bestand. Durch diese Abmischung wurde eine besonders gute Haftung zwischen der Schutzschicht und der Haftschicht erreicht. Die Haftung zwischen Schutzschicht und Haftschicht kann im übrigen durch eine intensive Coronavorbehandlung der Schutzschicht ab der Seite des Haftschichtauftrages verstärkt werden.

Die Bedeutung der Haftschicht zwischen Haftschicht und Schutzschicht liegt im Besonderen darin, dass keine Teile der Haftschicht auf den zu schützenden Gegenstand, also das lackierte Blech des Fahrzeuges, übertragen werden dürfen. Die Adhäsion zwischen Haftschicht und Schutzschicht war bei dieser Ausführungsform hinreichend.

Es gibt jedoch noch eine zweite möglichkeit, durch die fehlerhafte Eigenschaften der Schutzfolie verursacht sein können. Die zweite Möglichkeit ist der sogenannte Kohäsionsbruch. Darunter wird ein Bruch innerhalb der Haftschicht selbst verstanden, wenn die Molekülketten des polymeren Materials die Möglichkeit der Verschiebung unter thermischer oder mechanischer Beanspruchung haben. Dem Auftreten solcher Kohäsionsbrüche wird durch die erfindungsgemäße Vernetzung begegnet.

Bei den verschiedenen Ausführungsbeispielen der Schutzschicht wurden auch verschiedene Haftschichten eingesetzt. Die Auftragsstärke der Haftschicht wurde einerseits mit 2 g/m² und andererseits mit 5 g/m² gewählt. Die Haftschicht bestand aus einem UV-reaktiven, lösungsmittelfreien Acrylsäureester-Copolymer, mit einer Dichte von größer 1 g/m³. Die UV-reaktiven Gruppen waren nicht physikalisch eingemischt, sondern einpolymerisiert. Dadurch wurde eine Bindung an die Molekülketten erreicht, so dass flüchtige Bestandteile nicht migrieren und den Ablauf der Herstellung oder die Anwendung unkontrolliert stören können. Bei der Aufbringung der Haftschicht wurden Verarbeitungstemperaturen zwischen 120 und 140 °C angewendet. Die Grundklebrigkeit der Haftschicht aus Polymer wurde durch beigemengte Harze modifiziert, insbesondere durch teilhydrierte, veresterte Kolophoniumharze und Terpen-Phenol-Harze.

Die Eigenschaften und Merkmale der Adhäsion und der Kohäsion innerhalb der Haftschicht sowie zwischen Haftschicht und Schutzschicht werden von der Auftragsstärke der Haftschicht wesentlich geprägt. Die Steigerung der Dicke der Haftschicht führt dabei zur Erhöhung der Klebrigkeit. Dem wirkt die Vernetzung entgegen. Ein hoher Vernetzungsgrad verringert die Klebrigkeit.

Zur Vernetzung der verschiedenen Haftschichten wurden bevorzugt Quecksilbermitteldruckstrahler eingesetzt. Es können auch Mikrowellen-angeregte UV-Strahler eingesetzt werden. Je nach den eingesetzten Strahlern ergeben sich unterschiedliche Abzugsgeschwindigkeiten der Schutzfolie sowie die zugehörigen Vernetzungsintensitäten. Produktionsgeschwindigkeit und Vernetzungsintensität sind aneinander anzupassen. Im allgemeinen ist es nicht notwendig, während der Vernetzung unter Inertgasathmosphäre zu arbeiten. Es empfiehlt sich jedoch, die zur Vernetzung eingesetzte Strahlung direkt auf die Haftschicht zur Einwirkung zu bringen. Damit wird gleichzeitig eine unterschiedliche Vernetzungsdichte innerhalb der Haftschicht erreicht. In äußeren Bereichen ergibt sich eine höhere Vernetzung, in inneren Bereichen eine geringere. Die Bereiche der Haftschicht, die unmittelbar mit der Schutzschicht Kontakt haben, erhalten eine relativ geringe Vernetzung und zeichnen sich damit durch eine höhere Adhäsion aus. Dieser Zustand ist gewollt, um bei der höheren Adhäsion eine bessere Haftung der Haftschicht auf der Schutzschicht zu gewährleisten.

Die Haftschicht wird zweckmäßig auf die vorher hergestellt Schutzschicht aufgetragen. Der Auftrag kann aus der Schmelze heraus erfolgen und sollte gleichmäßig die Schutzschicht bedecken. Die Schmelze der Haftschicht wird vorbeheizt in einem Vorratsbehälter bereitgestellt und in Form eines flach austretenden Schmelzestranges auf die Schutzschicht ausgebracht. Die Gleichmäßigkeit des Auftragens der Haftschicht auf die Schutzschicht ist von großer Bedeutung. Es muss eine Filmbildung ermöglicht werden. Da die Schutzschicht vorzugsweise aus Polyolefinen besteht und somit hitzeempflindlich ist, darf eine Düse, aus der das material der Haftschicht ausgetragen wird, welches eine Temperatur zwischen 120 und 140° aufweist, nicht direkt auf der Schutzschicht aufliegen oder einen zu engen Kontakt haben. Abstände zwischen der Düse und der Schutzschicht von mehreren Millimetern sind erforderlich bzw. sinnvoll.

## Patentansprüche

1. Schutzfolie für den Transport von Fahrzeugen, mit einer Schutzschicht und einer mit der Schutzschicht verbundenen Haftschicht aus einem Polymer, **dadurch gekennzeichnet, dass** die Haftschicht aus dem Polymer vermittels in ihr eingelagerter fotoreaktiver UV-Vernetzungsinitiatoren, die zumindest im wesentlichen nur auf Strahlung in der Natur nicht vorkommender Wellenlängen reagieren, und einer UV-Bestrahlung ganz oder teilweise vernetzt ist.

2. Schutzfolie nach Anspruch 1, **dadurch gekennzeichnet, dass** die Haftschicht aus dem Polymer so vernetzt ist, dass die Vernetzung der Haftschicht und damit die Kohäsion auf der Seite der freien Oberfläche der Haftschicht größer als die Vernetzung und Kohäsion auf der der Schutzschicht zugekehrten Seite der Haftschicht ausgebildet ist.

3. Schutzfolie nach Anspruch 1 oder 2, **dadurch gekennzeichnet, dass** die Haftschicht aus dem Polymer so vernetzt ist, dass die Adhäsion der Haftschicht zu der Schutzschicht größer als die Adhäsion der Haftschicht auf der Seite der freien Oberfläche der Haftschicht ausgebildet ist.

4. Schutzfolie nach einem der Ansprüche 1 bis 3, **dadurch gekennzeichnet, dass** die Haftschicht aus einem Kleber besteht, der lösungsmittelfrei als Schmelze auf die Schutzschicht aufgebracht ist.

5. Schutzfolie nach einem der Ansprüche 1 bis 4, **dadurch gekennzeichnet, dass** die Haftschicht aus Acrylsäureester-Copolymer mit den eingebauten fotoreaktiver UV-Vernetzungsinitiatoren besteht.

6. Schutzfolie nach einem der Ansprüche 1 bis 5, **dadurch gekennzeichnet, dass** die Schutzschicht aus Polyolefinen besteht.

7. Schutzfolie nach einem der Ansprüche 1 bis 6, **dadurch gekennzeichnet, dass** die Schutzfolie bei ihrer Herstellung einer UV-Strahlung in einem Wellenlängenbereich von etwa 250 bis 260 nm ausgesetzt wird.

8. Verwendung einer Schutzfolie für den Transport von Fahrzeugen, mit einer Schutzschicht und einer mit der Schutzschicht verbundenen Haftschicht aus einem Polymer, die vermittels fotoreaktiver UV-Vernetzungsinitiatoren, die zumindest im wesentlichen nur auf Strahlung in der Natur nicht vorkommender Wellenlängen reagieren, ganz oder teilweise vernetzt ist.
